# DEMANDE DE BREVET EUROPEEN

(11) **EP 4 369 470 A1**
(43) Date de publication de la demande: **15.05.2024**
(21) Numéro de dépôt: 23208620.7
(22) Date de dépôt: 08.11.2023
(51) Int. Cl.: H01M 10/42, H01M 10/48, H01M 50/105, H01M 50/124, H01M 50/184, H01M 50/186, H01M 50/19, H01M 50/191, H01M 10/052, G02B 6/36, G02B 6/38

(54) **UNITÉ DE STOCKAGE D ÉNERGIE ÉLECTRIQUE ET PROCÉDÉ DE FABRICATION D'UNE TELLE UNITÉ**

(30) Priorité: 08.11.2022 FR 2211585
(71) Demandeur: COMMISSARIAT À L'ÉNERGIE ATOMIQUE ET AUX ÉNERGIES ALTERNATIVES, 75015 Paris (FR)
(72) Inventeur: RACCURT, Olivier, 38054 GRENOBLE (FR); SEPTET, Cédric, 38054 GRENOBLE (FR); BALFET, Pierre, 38054 GRENOBLE (FR)
(74) Mandataire: Hautier IP

(57) **Abrégé**

Unité de stockage d'énergie électrique, comprenant au moins une cellule (2) du type lithium-ion munie de deux électrodes séparées par un électrolyte configuré pour générer des porteurs de charge, l'unité comprenant un emballage (3) enrobant ladite au moins une cellule (2), un capteur optique (4) et au moins une fibre optique (5, 6), chaque fibre optique (5, 6) ayant une première extrémité (7, 8) couplée optiquement au capteur optique (4), l'emballage (3) comprenant un logement (10) au sein duquel est logé le capteur optique (4), l'unité comprenant au moins un embout (11, 12) situé à une deuxième extrémité (13, 14) de ladite au moins une fibre optique (5, 6) et l'emballage (3) comprend au moins un réservoir (15, 16) rempli d'un matériau (20a, 20b) hermétique à l'air, et ledit au moins un embout (11, 12) comprend une partie externe (23, 24) située à l'extérieur de l'emballage (3).

## Description

### DOMAINE TECHNIQUE

La présente invention concerne les unités de stockage d'énergie électrique, telles qu'une batterie, et plus particulièrement une batterie lithium-ion

### ETAT DE LA TECHNIQUE

Le domaine des batteries lithium-ion connaît un très fort développement depuis ces dix dernières années. Du fait de sa forte capacité, de sa stabilité et sa durabilité, cette technologie de stockage de l'énergie électrique s'est largement déployée que ce soit pour l'électroportatif, les véhicules ou le stationnaire.

Une batterie lithium-ion comprend une ou plusieurs cellules, dites cellules lithium-ion. Chaque cellule comporte deux électrodes séparées par un électrolyte configuré pour générer des porteurs de charge, notamment des ions lithium. On appelle également un module de batterie, un ensemble comprenant plusieurs cellules, une batterie pouvant comprendre un ou plusieurs modules. Afin d'augmenter les performances, la sécurité et la durabilité des cellules lithium-ion, il est nécessaire de mieux connaître les paramètres internes des cellules en fonctionnement. En effet, afin d'éviter de solliciter les cellules, que ce soit en charge ou en décharge dans des zones dangereuses, des marges de sécurité sont utilisées, en particulier des plages de tension de fonctionnement en charge ou en décharge. Un autre paramètre qui est surveillé est la température. Lors de la sollicitation, les processus électrochimiques au sein de la cellule génèrent de la chaleur. Cette chaleur doit être évacuée efficacement par un système externe. Il est donc intéressant pour utiliser les batteries lithium-ion d'utiliser une unité de commande électronique, appelée généralement BMS (pour « Battery Management System » en langue anglaise, c'est-à-dire un système de gestion de batterie) qui va limiter les sollicitations afin d'optimiser les performances tout en garantissant la sécurité et la longévité des batteries. Pour ce faire, ce système doit pouvoir mesurer en temps réel les paramètres des cellules qui composent la batterie. La batterie est en effet composée en général de plusieurs cellules assemblées et le BMS doit gérer l'ensemble des cellules de la batterie.

Afin d'alimenter le BMS en données de contrôle, plusieurs mesures sont effectuées sur les cellules ou au niveau des modules. Actuellement les mesures effectuées sont la température externe des cellules, la tension et le courant. Cependant, ces données ne sont pas suffisantes pour avoir une image précise des phénomènes en jeu à l'intérieur de la cellule et ne permettent pas d'anticiper les dégradations et les risques associés. Ces mesures sont effectuées par l'ajout de capteurs sur les cellules (des capteurs de température, de pression, de déformation, acoustiques, etc.), mais également à l'intérieur des cellules, par des capteurs dits internes, au coeur de l'électrolyte ou sur les électrodes.

Parmi ces capteurs internes, ceux à base de fibre optique ont montré leur pertinence et leur capacité à mesurer plusieurs paramètres internes des cellules tels que la température, la pression, la déformation, le changement de phase d'une électrode ou encore des paramètres spécifiques des réactions chimiques de décomposition.

On peut citer plusieurs techniques utilisant des fibres optiques pour des mesures en laboratoire, à titre d'exemple, une technique par onde évanescente en transmission ou en réflexion, ou par utilisation de sondes thermoluminescentes pour la mesure interne de la température, les applications utilisant des fibres à réseau de Bragg pour la mesure de la température, de la pression ou de la composition chimique, ainsi que l'utilisation de fibre optique par diffusion de Raman. On peut également citer les fibres optiques avec capteurs plasmoniques permettant de mesure une liaison d'un « ligand » sur un « récepteur » adsorbé à la surface d'une couche métallique.

On peut citer, par exemple, la demande de brevet européen EP3130029, qui divulgue une batterie équipée d'un élément de détection plasmonique. Mais ces techniques sont adaptées pour effectuer des mesures en laboratoire et ne sont pas facilement utilisables pour des batteries embarquées au sein d'appareils électriques.

On peut également citer les cellules lithium-ion du type swagelok ^{®} (marque déposée), qui correspondent à des cellules spécialement conçues pour la recherche en laboratoire. Ces cellules comportent un capteur optique relié à une fibre optique traversant une paroi de la cellule, en passant à l'intérieur d'un tube en métal prévu sur la paroi de la cellule. Or la sortie de la fibre à l'extérieur du tube reste fragile. Tous ces types de connexions proposés sont adaptés pour des manipulations en laboratoire et ne garantissent pas l'intégrité de la fibre optique et sa facilité de mise en oeuvre et de manipulation pour une batterie adaptée pour être embarquée dans un appareil électrique.

Si les capteurs à fibre optique ont montré leur efficacité pour la mesure, ceux-ci sont compliqués à mettre en oeuvre, en particulier pour une utilisation industrielle des cellules et notamment pour une utilisation des batteries in situ, c'est-à-dire lorsqu'elles sont embarquées dans des appareils divers et variés, tels que des téléphones portatifs intelligents, des ordinateurs, portables ou fixes, des véhicules automobiles... En effet, une fois le capteur placé à l'intérieur d'une cellule, il est nécessaire de faire sortir la fibre optique pour pouvoir la relier à un système de mesure, par exemple au BMS.

De manière générale, les cellules lithium-ion possèdent toutes un emballage hermétique permettant d'isoler l'intérieur des cellules de l'air ambiant. En effet, les cellules sont assemblées en salle anhydre et après activation les matériaux actifs ne doivent pas être en contact avec l'air sous peine de se dégrader rapidement. L'emballage peut être souple ou rigide. On entend par emballage souple, un emballage déformable sous l'effet de son propre poids. Au contraire, on entend par emballage rigide, un emballage qui ne se déforme pas sous son propre poids. Actuellement les fibres optiques sont intégrées dans des cellules en faisant passer la fibre optique à travers l'emballage. Ce qui rend les fibres optiques relativement fragiles, car la moindre contrainte au niveau de la fibre optique va engendrer une dégradation du coeur de fibre ou bien sa rupture. Par ailleurs, il est aussi parfois difficile de sceller correctement la cellule sans endommager la fibre. En outre, lorsqu'une cellule est instrumentée avec une fibre optique, la partie de la fibre optique qui sort de la cellule est souvent longue et fragile. Cela rend difficile sa manipulation lors de l'insertion de la fibre optique dans la cellule, mais également lors de la manipulation de la cellule après scellement et lors de son intégration dans un appareil électrique.

Par exemple dans le cas d'une cellule à étui, appelée « pouch cell » en langue anglaise, c'est-à-dire une cellule de poche, la cellule est emballée dans un étui comprenant un film composite fait de deux polymères calaminés avec une feuille d'aluminium au centre. L'étui est généralement souple. Le scellement de ce type d'emballage se fait par pression d'un élément chauffant qui sert à fondre les polymères de surface et ainsi sceller la cellule. Cette technique de scellement est également appelée thermocollage ou thermo-scellement. Le fait de faire passer la fibre optique à cet endroit pour accéder au coeur de la cellule contraint, d'une part à utiliser des fibres optiques dont la tenue mécanique et thermique est suffisante pour supporter l'étape de thermocollage, et d'autre part à limiter la température et la pression afin de ne pas endommager la fibre optique, ce qui peut conduire à un scellement non optimal.

Il existe des cellules à étui comprenant un capteur à fibre optique et un connecteur apte à être connecté à un BMS extérieur à la cellule, par une connexion optique ou par ondes radios. Le connecteur est relié à la partie de fibre optique qui sort à l'extérieur de l'étui, le connecteur est en outre collé sur l'étui. Mais l'étui est scellé par un thermocollage qui peut endommager la fibre optique.

Ainsi il existe une difficulté pour relier un capteur, placé à l'intérieur d'une cellule, vers l'extérieur de la cellule.

Un objet de la présente invention est donc de fournir des moyens pour garantir l'intégrité d'une fibre optique reliée à un capteur optique situé au sein d'un emballage d'une unité de stockage d'énergie électrique.

Les autres objets, caractéristiques et avantages de la présente invention apparaîtront à l'examen de la description suivante et des dessins d'accompagnement. Il est entendu que d'autres avantages peuvent être incorporés.

### RESUME

Il est proposé une unité de stockage d'énergie électrique, comprenant au moins une cellule du type lithium-ion munie de deux électrodes séparées par un électrolyte configuré pour générer des porteurs de charge, l'unité comprenant un emballage enrobant ladite au moins une cellule, un capteur optique et au moins une fibre optique, chaque fibre optique ayant une première extrémité couplée optiquement au capteur optique, l'emballage comprenant un logement au sein duquel est logé le capteur optique.

L'unité comprend au moins un embout situé à une deuxième extrémité de ladite au moins une fibre optique et l'emballage comprend au moins un réservoir communicant avec le logement de l'emballage par l'intermédiaire d'au moins un orifice traversé par ladite au moins une fibre optique, ledit au moins un réservoir étant rempli d'un matériau hermétique à l'air, et en ce que ledit au moins un embout comprend une partie interne encapsulée au sein du matériau remplissant ledit au moins un réservoir et une partie externe située à l'extérieur de l'emballage.

Ainsi on fournit une unité de stockage d'énergie électrique munie d'un capteur optique couplé à une fibre optique qui évite d'endommager la fibre optique, lors d'une manipulation pour placer le capteur optique au sein du logement où sont situées les cellules, et également lors d'une utilisation de l'unité en fonctionnement, en particulier lorsque l'unité est embarquée dans un équipement mobile.

Selon un autre aspect, il est proposé un procédé de fabrication d'une unité telle que citée ci-avant, comprenant :
- une fourniture :
   - d'au moins une cellule du type lithium-ion munie de deux électrodes séparées par un électrolyte configuré pour générer des porteurs de charge ;
   - d'un capteur optique;
   - d'au moins une fibre optique, chaque fibre optique ayant une première extrémité couplée optiquement au capteur optique ; et
   - d'un emballage comprenant un logement au sein duquel est logée ladite au moins une cellule.

Le procédé comprend :
- un montage d'au moins un embout à une deuxième extrémité de ladite au moins une fibre optique ;
- une formation au sein de l'emballage d'au moins un réservoir communicant avec le logement par l'intermédiaire d'au moins un orifice ;
- un positionnement du capteur optique au sein du logement et de ladite au moins une fibre optique traversant ledit au moins un orifice ; et
- un remplissage dudit au moins un réservoir d'un matériau hermétique à l'air, de sorte que ledit au moins un embout comprend une partie interne encapsulée au sein du matériau et une partie externe située à l'extérieur de l'emballage.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente schématiquement une vue en perspective d'un mode de réalisation d'une unité de stockage d'énergie électrique;
La figure 2 représente schématiquement une vue de dessus en coupe d'un autre mode de réalisation d'une unité de stockage d'énergie électrique ;
La figure 3 représente schématiquement une vue de dessus en coupe d'un autre mode de réalisation d'une unité de stockage d'énergie électrique ;
Les figures 4 et 5 représentent schématiquement des vues en perspective d'un autre mode de réalisation d'une unité de stockage d'énergie électrique ;
Les figures 6 à 11 représentent schématiquement les principales étapes de mise en oeuvre d'un procédé de fabrication d'une unité de stockage d'énergie électrique.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation et de mises en oeuvre de l'invention, sont énoncées ci-après des caractéristiques optionnelles qui peuvent éventuellement être utilisées en association ou alternativement.

Selon un exemple, ledit au moins un réservoir est un unique réservoir rempli d'un matériau hermétique à l'air, une première fibre optique relie le capteur optique à un premier embout, et une deuxième fibre optique relie le capteur optique à un deuxième embout, les premier et deuxième embouts comprenant respectivement deux parties internes encapsulées au sein du matériau remplissant l'unique réservoir et deux parties externes situées à l'extérieur de l'emballage. Une telle unité est particulièrement adaptée pour des capteurs optiques utilisant une entrée et une sortie reliée aux cellules.

Selon un exemple, l'unité comprend des premier et deuxième réservoirs remplis respectivement de premier et deuxième matériaux hermétiques à l'air, une première fibre optique reliant le capteur optique à un premier embout, et une deuxième fibre optique reliant le capteur optique à un deuxième embout, les premier et deuxième embouts comprenant respectivement deux parties internes encapsulées respectivement au sein des premier et deuxième matériaux remplissant respectivement les premier et deuxième réservoirs et deux parties externes situées à l'extérieur de l'emballage. Une telle unité permet de placer des sorties de fibres optiques de chaque côté d'un emballage de l'unité selon les besoins.

Selon un exemple, l'emballage est souple de façon à être déformable sous l'effet de son propre poids. Ce qui convient particulièrement aux unités ayant des cellules du type « pouch cell ».

En variante, l'emballage peut être rigide de façon à ne pas être déformable sous l'effet de son propre poids.

Selon un exemple, ledit au moins un embout a une forme cylindrique comprenant un creux dans lequel est introduite la deuxième extrémité de ladite au moins une fibre optique. Un tel embout est particulièrement simple à réaliser.

Selon un exemple, ledit au moins un embout comprend de la céramique.

Selon un exemple, ledit au moins un embout est maintenu à la deuxième extrémité de ladite au moins une fibre optique à partir d'une colle comprenant au moins un polymère époxyde. On rigidifie ainsi la deuxième extrémité de la fibre optique pour améliorer son maintien au sein de l'emballage.

Selon un autre exemple, ladite au moins une fibre optique est enrobée, au moins en partie, d'une gaine s'étendant entre la première extrémité de ladite au moins une fibre optique et une partie de ladite au moins une fibre optique située au sein du logement de l'emballage.

Selon un exemple, la deuxième extrémité de ladite au moins une fibre optique est encapsulée au sein dudit au moins un embout de sorte que la deuxième extrémité ne dépasse pas ledit au moins un embout. On évite ainsi tout endommagement éventuel de la fibre optique.

Selon un exemple, l'unité comprend au moins un élément de maintien adhésif situé au sein du logement et en contact avec ladite au moins une fibre optique et une paroi interne de l'emballage délimitant le logement. Ce qui permet d'améliorer le maintien de la fibre optique dans le logement.

Selon un exemple, le positionnement comprend un placement d'au moins un élément de maintien adhésif au sein du logement et en contact avec ladite au moins une fibre optique et une paroi interne de l'emballage délimitant le logement.

Selon un exemple, l'emballage comprend deux feuilles souples de façon à être déformables sous l'effet de leur propre poids, et le procédé comprend, avant le remplissage, un scellement des feuilles souples autour du logement et dudit au moins un réservoir.

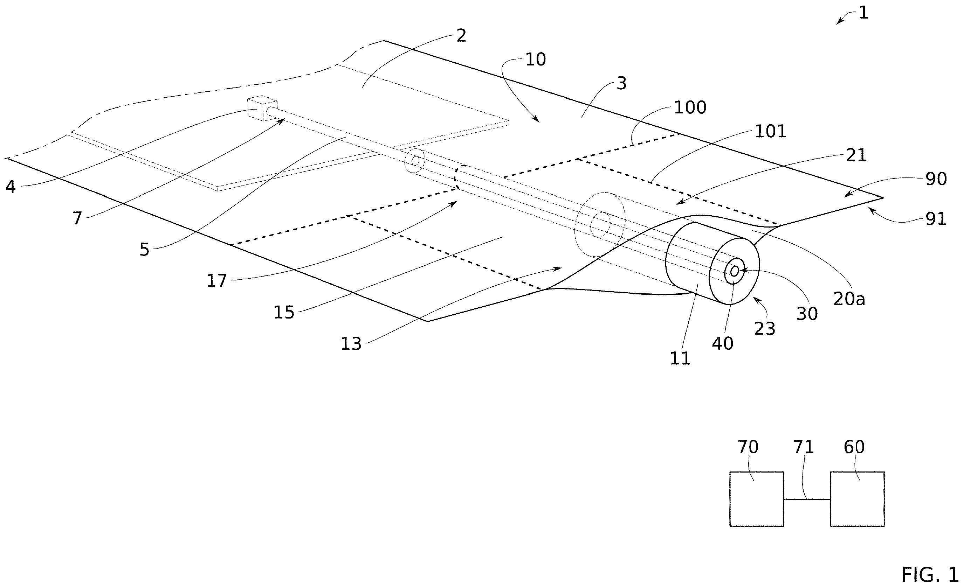

Sur les figures 1 à 5, on a représenté une unité 1 de stockage d'énergie électrique, comprenant au moins une cellule 2 du type lithium-ion configurée pour fournir une puissance électrique. La cellule 2 peut être, en outre, configurée pour stocker de l'énergie électrique. De manière générale, la cellule 2 comprend deux électrodes séparées par un électrolyte configuré pour générer des porteurs de charge. L'unité 1 peut comprendre plusieurs cellules formant un module de l'unité 1. L'unité 1 peut également comprendre plusieurs modules.

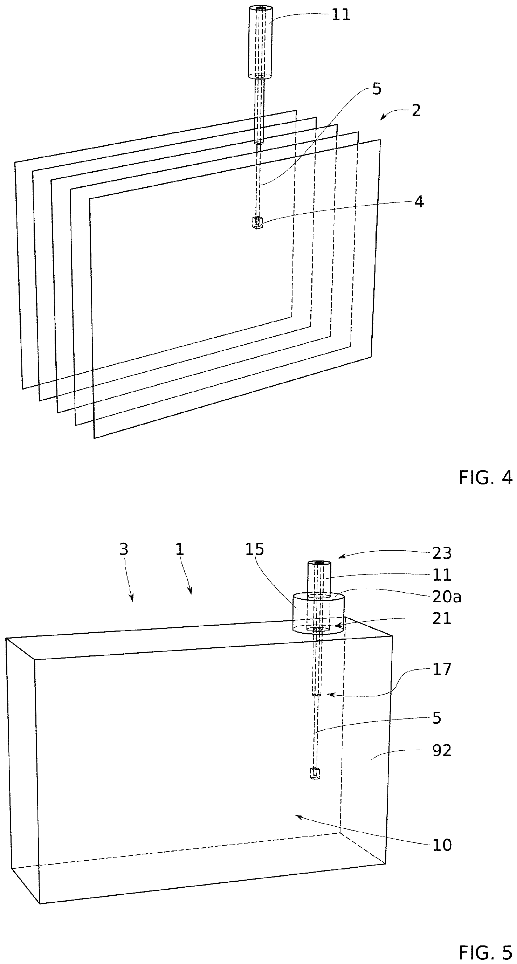

L'unité 2 comprend un emballage 3 enrobant la ou les cellules 2, un capteur optique 4, et au moins une fibre optique 5, 6, chaque fibre optique 5, 6 ayant une première extrémité 7, 8 couplée optiquement au capteur optique. L'emballage 3 comprend un logement 10 au sein duquel est logé le capteur optique 4. L'emballage 3 peut être souple de façon à être déformable sous l'effet de son propre poids, comme illustré aux figures 1 à 3 et 5, 6. Un emballage 3 souple peut comprendre deux feuilles 90, 91 scellées hermétiquement, par exemple par thermocollage, délimitant le logement 10 situé entre les deux feuilles 90, 91. En variante, l'emballage 3 peut être rigide de façon à ne pas être déformable sous l'effet de son propre poids, comme illustré à la figure 5. Par exemple, un emballage 3 rigide peut comprendre une boite 92 au sein de laquelle le logement 10 est formé. En d'autres termes, le logement 10 est délimité par les parois de la boite 92.

Plus particulièrement, l'unité 1 comprend au moins un embout 11, 12 situé à une deuxième extrémité 13, 14 de chaque fibre optique 5, 6. Un embout 11, 12 permet de faire passer une fibre optique 5, 6 à travers l'emballage 3. L'embout 11, 12 permet, en outre, de faciliter la connexion de la fibre optique 5, 6 à une unité de commande électronique 60 située à l'extérieur de l'emballage 3, par exemple un BMS. L'embout 11, 12 est en outre configuré pour être connecté mécaniquement à un connecteur 70 relié à l'unité de commande électronique 60, par une connexion 71. La connexion 71 peut être une autre fibre optique, un fil électrique, ou encore des ondes radio. De manière générale, le connecteur 70 et la connexion 71 sont adaptés pour transmettre des informations, telles que des paramètres de mesure ou des données de contrôle, entre le capteur optique 4 et l'unité de commande électronique 60. Un embout 11, 12 permet d'éviter d'endommager une fibre optique 5, 6, notamment lors de la manipulation et l'intégration de la fibre optique 5, 6 dans l'emballage 3. Un embout 11, 12 permet de garantir l'intégrité de la fibre optique 5, 6, la qualité de la connexion optique. Par ailleurs, un embout 11, 12 permet de rigidifier la fibre optique 5, 6 pour faciliter sa manipulation. Un embout 11, 12 permet également de découpler la contrainte d'insertion de la fibre optique 5, 6 avec sa connexion au connecteur 70.

Le connecteur 70 peut comprendre un boitier ayant un logement pour introduire la partie externe 23, 24 d'un embout 11, 12. Par exemple le connecteur 70 peut comprendre une vis pour serrer l'embout 11, 12 dans le logement du connecteur 70 afin de le maintenir immobile par rapport au boitier du connecteur 70. En variante, le connecteur 70 peut comprendre un manchon avec une rainure longitudinale pour connecter un embout 11, 12 avec la connexion 71, par exemple une autre fibre optique extérieure à l'emballage 3. Le manchon est déformable et peut être fermé, en réduisant la rainure pour serrer l'embout 11, 12 et l'autre fibre optique afin de les maintenir en contact.

Par exemple, un embout 11, 12 a une forme cylindrique comprenant un creux 30 dans lequel est introduite la deuxième extrémité 13, 14 d'une fibre optique 5, 6. Par exemple un embout 11, 12 comprend de la céramique. La céramique permet de rendre compatible l'embout 11, 12 avec le milieu interne de la cellule 2. En d'autres termes, la céramique est inerte chimiquement et électriquement. La céramique peut être de l'alumine. Avantageusement, un embout 11, 12 est réalisé entièrement à partir de céramique. Par exemple, l'unité 1 peut comporter une gaine 40, 41 enrobant chaque fibre optique 5, 6. Une fibre optique 5, 6 peut être enrobée, au moins en partie, d'une gaine 40, 41 s'étendant entre la deuxième extrémité 13, 14 de la fibre optique 5, 6 et une partie de la fibre optique 5, 6 située au sein du logement 10 de l'emballage 3. De manière générale, la deuxième extrémité 13, 14 d'une fibre optique 5, 6 est montée fixe sur un embout 11, 12. C'est-à-dire que la deuxième extrémité 13, 14 d'une fibre optique 5, 6 est immobile par rapport à l'embout 11, 12 sur lequel elle est montée. On dit également qu'une fibre optique 5, 6 comporte un coeur de fibre optique enrobé d'une gaine 40, 41. La deuxième extrémité 13, 14 d'une fibre optique 5, 6, est montée fixe sur un embout 11, 12, soit par l'intermédiaire de la gaine 40, 41 placée en contact mécanique avec l'embout 11, 12, soit directement de sorte que le coeur de la fibre optique est placé en contact mécanique avec l'embout 11, 12. Par exemple, un embout 11, 12 peut être maintenu à la deuxième extrémité 13, 14 d'une fibre optique 5, 6 à partir d'une colle comprenant au moins un polymère époxyde. En particulier, le polymère époxyde est compatible, en termes d'adhérence, avec la fibre optique 5, 6, avec les solvants de l'électrolyte et avec l'atmosphère interne de la cellule 2.

Avantageusement, la deuxième extrémité 13, 14 d'une fibre optique 5, 6 est encapsulée au sein d'un embout 11, 12 de sorte que la deuxième extrémité 13, 14 ne dépasse pas l'embout 11, 12. C'est-à-dire que la deuxième extrémité 13, 14 de la fibre optique 5, 6 est située à l'intérieur de l'embout 11, 12. En d'autres termes la deuxième extrémité 13, 14 de la fibre optique 5, 6 n'est pas en saillie de l'embout 11, 12 et à l'extérieur de l'unité 1. On entend par dépasser l'embout 11, 12, le fait que la deuxième extrémité 13, 14 de la fibre optique 5, 6 est située en saillie de l'embout 11, 12 et à l'extérieur de l'unité 1. Avantageusement, la deuxième extrémité 13, 14 située en saillie de l'embout 11, 12 est poncée pour qu'elle ne dépasse pas à l'extérieur de l'embout 11, 12 et pour avoir une surface compatible avec le connecteur 70. Une telle unité 1 ne présente pas une partie de fibre optique 5, 6 située à l'extérieur d'un embout 11, 12 fixé à l'emballage 3 et permet une connexion facilitée à un appareil de mesure situé à l'extérieur de l'emballage 3.

L'emballage 3 comprend, en outre, au moins un réservoir 15, 16 communicant avec le logement 10 de l'emballage 3 par l'intermédiaire d'au moins un orifice 17, 18 traversé par une fibre optique 5, 6. En particulier, chaque réservoir 15, 16 est rempli d'un matériau 20a, 20b hermétique à l'air. Chaque embout 11, 12 comprend une partie interne 21, 22 encapsulée au sein du matériau 20a, 20b remplissant le réservoir 15, 16, et une partie externe 23, 24 située à l'extérieur de l'emballage 3.

En particulier, lorsque l'emballage 3 est souple, l'emballage 3 est scellé hermétiquement par thermocollage. Le thermocollage consiste à sceller les feuilles 90, 91 de l'emballage selon des lignes 100 à 102 représentées en pointillés sur les figures 1 à 3 et 10, 11. Une première ligne 100 représente le scellement de la, ou des cellules 2. Les deuxième et troisième lignes 101, 102 représentent les scellements des premier et deuxième réservoirs 15, 16 respectivement.

Un réservoir 15, 16 enrobe la partie interne 21, 22 d'un embout 11, 12, c'est-à-dire que la partie interne 21,22 est logée entièrement au sein du réservoir 15, 16. En d'autres termes, un réservoir 15, 16 n'encapsule pas un embout 11, 12 dans son intégralité. Un réservoir 15, 16 est en outre rempli d'un matériau 20a, 20b hermétique à l'air, par exemple une résine, afin de fixer un embout 11, 12 à l'emballage 3. Deux réservoirs distincts 15 et 16 peuvent être remplis d'un même matériau 20a ou par deux matériaux 20a, 20b différents, chaque matériau 20a 20b étant hermétique à l'air. Un réservoir 15, 16 permet en outre de maintenir dans un bloc rigide la partie de la fibre comprise entre l'orifice 17, 18 et un embout 11, 12. Ainsi, une partie externe 23, 24 d'un embout 11, 12 ressort à l'extérieur du matériau 20a, 20b pour pouvoir être connectée, par exemple, à une autre fibre optique. La fibre 5, 6 est ainsi maintenue de façon rigide à l'intérieur de l'unité 1 et ne peut pas être soumise à une torsion ou une pliure, car prise dans la masse.

Par ailleurs, un embout 11, 12 permet d'utiliser un connecteur 70 afin de pouvoir brancher ou débrancher à volonté la fibre optique 5, 6.

Avantageusement, la deuxième extrémité 13, 14 d'une fibre optique 5, 6 peut être placée au plus proche du capteur optique 4, ce qui permet d'utiliser une fibre optique 5, 6 sans enroulement. C'est-à-dire une fibre 5, 6 ayant une forme linéaire. En d'autres termes, une fibre optique 5, 6 peut avoir une longueur inférieure ou égale à une longueur de l'emballage 3, par exemple inférieure ou égale à une moitié de la longueur de l'emballage 3.

L'unité 1 peut également comprendre un élément 50, 51 de maintien adhésif situé au sein du logement 10 et en contact avec une fibre optique 5, 6 et une paroi interne de l'emballage 3 délimitant le logement 10.

En d'autres termes, le logement 10 est délimité par une paroi interne de l'emballage 3. Chaque réservoir 15, 16 est séparé du logement 10 par la paroi interne de l'emballage 3. La paroi interne de l'emballage 3 comprend au moins un orifice parmi les orifices 17, 18 traversés par une fibre optique 5, 6. Par exemple, chaque réservoir 15, 16 communique avec le logement 10 de l'emballage 3, uniquement par l'intermédiaire d'au moins un orifice 17, 18 de la paroi interne de l'emballage 3. Par ailleurs, lorsque chaque réservoir 15, 16 est rempli d'un matériau 20a, 20b hermétique à l'air, les matériaux 20a, 20b hermétiques à l'air sont situés à l'extérieur du logement 10. En d'autres termes, les matériaux 20a, 20b hermétiques à l'air sont séparés du logement 10 par la paroi interne de l'emballage 3. Ainsi, les matériaux 20a, 20b hermétiques à l'air ne sont pas en contact avec le capteur optique 4 logé au sein du logement 10.

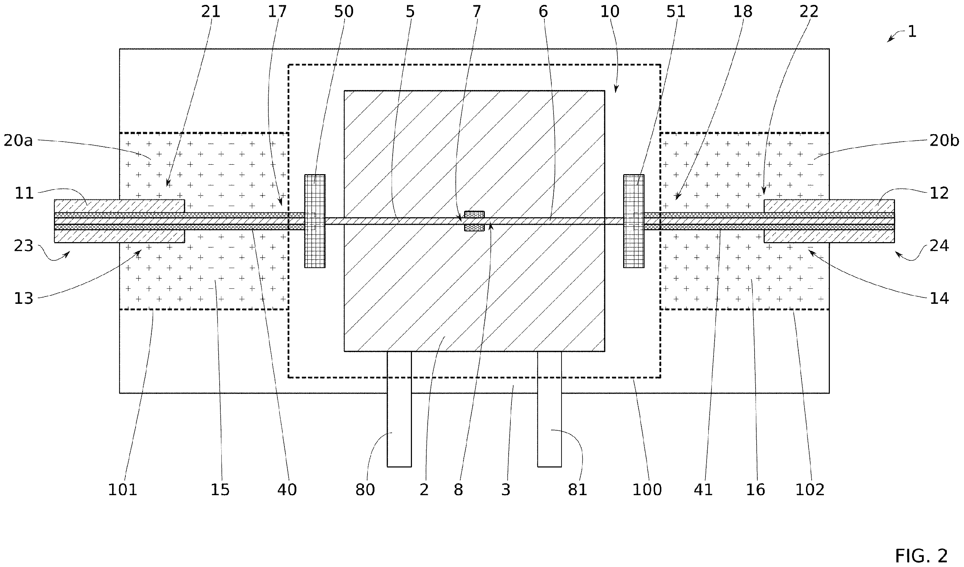

Sur la figure 2, on a représenté un mode de réalisation dans lequel l'unité 1 comprend des premier et deuxième réservoirs 15, 16 remplis respectivement de premier et deuxième matériaux 20a, 20b hermétiques à l'air, une première fibre optique 5 reliant le capteur 4 à un premier embout 11, et une deuxième fibre optique 6 reliant le capteur 4 à un deuxième embout 12. Les premier et deuxième embouts 11, 12 comprennent respectivement deux parties internes 21, 22 encapsulées respectivement au sein des premier et deuxième matériaux 20a, 20b remplissant respectivement les premier et deuxième réservoirs 15, 16 et deux parties externes 23, 24 situées à l'extérieur de l'emballage 3. Dans ce cas, deux fibres optiques 5, 6 présentent deux sorties. En variante, les première et deuxième fibres optiques 5, 6 forment une même fibre optique 5. C'est-à-dire que les premières extrémités 7, 8 sont couplées optiquement entre elles et au capteur optique 4. Dans ce cas une fibre optique 5 présente également deux sorties. Par exemple, deux embouts 11, 12 sont placés sur deux côtés opposés de l'emballage 3.

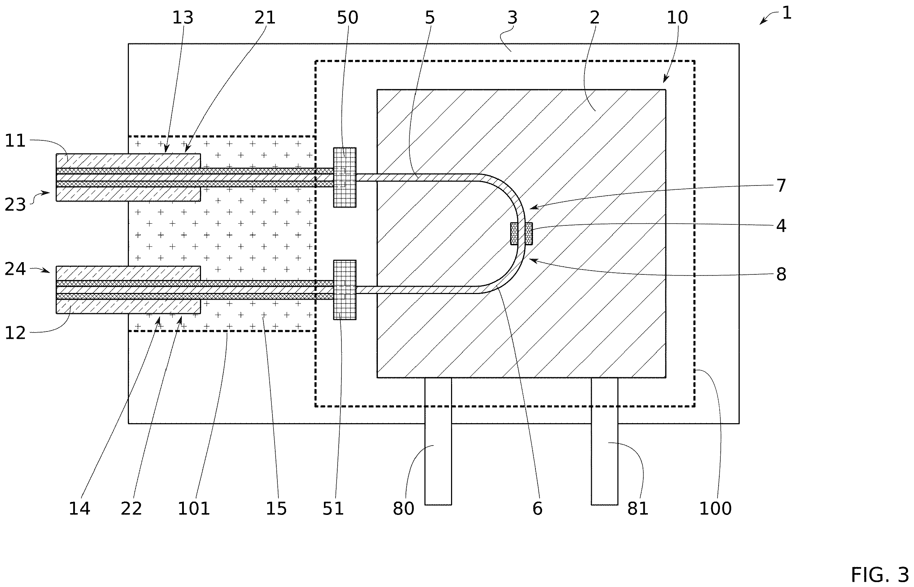

Sur la figure 3, on a représenté un autre mode de réalisation dans lequel l'unité 1 comprend un réservoir 15 rempli d'un matériau 20a hermétique à l'air, une première fibre optique 5 reliant le capteur 4 à un premier embout 11, et une deuxième fibre optique 6 reliant le capteur 4 à un deuxième embout 12. Les premier et deuxième embouts 11, 12 comprennent respectivement deux parties internes 21, 22 encapsulées au sein du matériau 20a remplissant le réservoir 15 et deux parties externes 23, 24 situées à l'extérieur de l'emballage 3. En variante, les première et deuxième fibres optiques 5, 6 forment une même fibre optique 5. C'est-à-dire que les premières extrémités 7, 8 sont couplées optiquement entre elles et au capteur optique 4. Dans ce cas une fibre optique 5 présente également deux sorties. Deux embouts peuvent être placés sur un même côté de l'emballage 3.

Les modes de réalisation illustrés aux figures 2 et 3 sont particulièrement adaptés pour des capteurs optiques 4 qui nécessitent une entrée et une sortie d'une cellule 2. Par exemple, les capteurs 4 peuvent être équipés de sonde le long d'une fibre optique 5 (par exemple les fibres à réseau de Bragg ou par diffusion Rayleigh) ou bien des capteurs 4 en surface (fibre à onde évanescente). Pour ce type de capteur 4 on peut être amené à travailler en transmittance il faut donc que la fibre optique 5 entre et ressorte à un endroit différent d'une cellule 2. Il faut dans ce cas deux orifices 17, 18 pour le passage de la fibre optique 5. On peut donc préparer les deux deuxièmes extrémités 13, 14 de la fibre optique 5 de la façon décrite ci-avant, et insérer le capteur optique 4 dans le logement 10 de la même façon qu'avec deux fibres optiques distinctes 5, 6, mais avec deux sorties.

Sur les figures 4 et 5 on a représenté un autre mode de réalisation d'une unité 1 de stockage d'énergie électrique. Dans ce mode de réalisation, l'unité 1 comporte un emballage 3 rigide, telle une boite 92 ou un boitier prismatique. La figure 4 illustre un exemple d'insertion d'un capteur optique 4 placé dans un empilement, ou un enroulement d'électrodes. La boite 92 est composée d'un orifice 17 permettant de faire sortir la fibre optique 5 à l'extérieur du logement 10. Puis la partie interne 21 de l'embout 11 est logée dans un réservoir 15 formé sur la boite 92, ou au sein d'une paroi de la boite 92. Puis le réservoir 15 est rempli du matériau 20a hermétique à l'air afin de rigidifier et sceller l'embout 11.

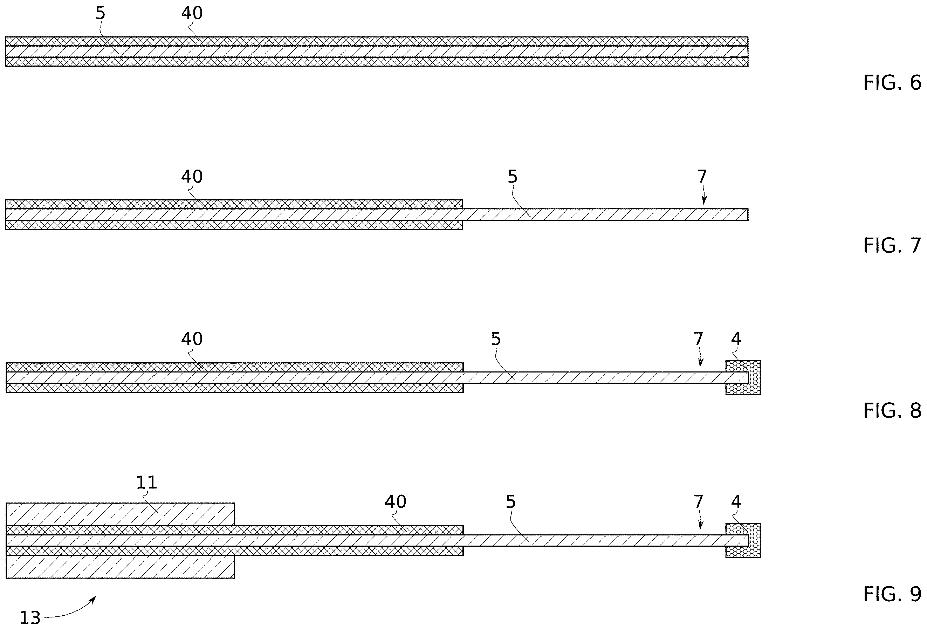

On a illustré sur les figures 6 à 10, les principales étapes d'un procédé de fabrication d'une unité 1 de stockage d'énergie électrique.

De manière générale, le procédé comprend une insertion d'une fibre optique 5, 6 dans une cellule 2. La cellule 2 peut être neuve non activée, c'est-à-dire en cours de fabrication, ou être complète et activée en effectuant une ouverture de l'emballage 3. Dans le cas d'une cellule 2 neuve, les électrodes positives et négatives ainsi que le séparateur sont empilés ou enroulés. Or pour pouvoir faire des mesures in situ il faut placer la fibre optique 5, 6 au coeur de la cellule 2 soit entre l'électrode positive et le séparateur, soit entre l'électrode négative et le séparateur. En fonction de la position choisie, cela se fait au cours de soit l'empilement (pour une cellule empilée) soit de l'enroulement (pour une cellule enroulée). Comme en général la fibre optique 5, 6 est assez longue, il est délicat de manipuler la fibre 5, 6, de l'insérer sans endommager la fibre 5, 6. Toutes ces opérations se font, de préférence, en salle anhydre, par exemple à l'aide d'une boite à gants. Ensuite une fois la fibre 5, 6 placée, il faut la maintenir en place avant le scellement. Pour cela, la fibre 5, 6 est fixée avec un ou plusieurs éléments de maintien adhésifs 50, 51, par exemple des morceaux de scotch. Ensuite une fois l'élément de maintien adhésif 50, 51 placé et l'enroulement de la cellule 2 complet, ainsi que la soudure des connecteurs externes 80, 81, la cellule 2 est remplie d'électrolyte, puis tirée sous vide avant d'être scellée. Lors de cette opération, il est délicat de maintenir la fibre optique 5, 6 en place. Par ailleurs, le thermocollage se fait sur la fibre 5, 6. Cette opération est très délicate.

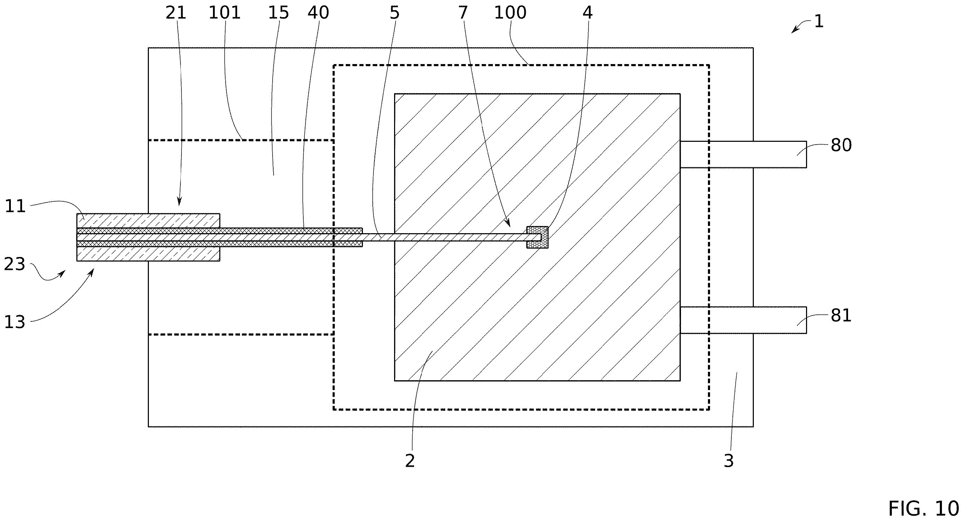

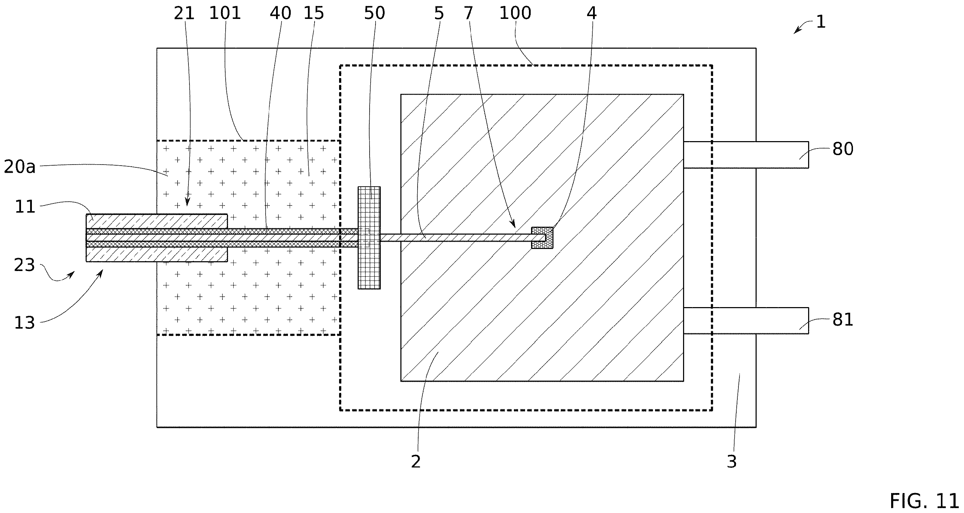

En particulier, les figures 6 à 11 représentent les principales étapes de fabrication d'une unité 1 de stockage d'énergie électrique, et plus particulièrement d'une unité 1 ayant un emballage 3 souple. Comme illustré à la figure 6, une fibre optique 5 est découpée sur une longueur correspondante à la position que le capteur 4 devra avoir dans la cellule 2 et à la taille de la cellule 2 logée au sein de son emballage 3 souple. Avantageusement, une gaine 40 peut enrober le coeur de la fibre optique 5. Puis, comme illustré à la figure 7, on a représenté une étape optionnelle dans laquelle la gaine 40 est dénudée sur une longueur destinée à être inférieure ou égale à une distance entre la première extrémité 7 de la fibre optique 5 et l'orifice 17, 18 lorsque la fibre est placée au sein de l'emballage 3. Par exemple, si le capteur 4 est placé au centre d'une électrode de la cellule 2, la distance est égale à la moitié de la largeur de l'électrode plus un demi-centimètre environ. Comme illustré à la figure 8, la fibre optique 5, 6 est rendue fonctionnelle, c'est-à-dire qu'à sa première extrémité 7 dénudée, est déposée le capteur optique 4. Le capteur optique 4 peut être de différente nature (selon le paramètre physique que l'on souhaite mesurer). Ensuite, comme illustré à la figure 9, à la deuxième extrémité 13 est inséré un embout 11. La fibre optique 5 est fixée à l'embout 11 à l'aide d'une colle comprenant un polymère époxyde, puis la deuxième extrémité 13 de la fibre 5 qui sort de l'embout 11 est découpée et polie pour avoir une surface optique. Puis, comme illustré à la figure 10, on positionne le capteur 4 au sein du logement 10, par exemple en contact avec un élément d'une cellule 2, et l'embout 11 au sein du réservoir 15. Puis, comme illustré à la figure 11, on remplit le réservoir 15 du matériau 20a. Avantageusement, avant l'étape de remplissage on peut sceller par thermocollage l'emballage 3.

L'unité de stockage d'énergie électrique qui vient d'être décrite permet de garantir une connexion correcte entre un capteur optique et un appareil de mesure situé à l'extérieur d'un emballage de l'unité. Une comparaison avec un capteur optique monté de façon classique au sein de la même unité a permis de montrer que la qualité de connexion était quasi-identique. Ainsi, l'utilisation d'un embout et d'un connecteur ne dégrade pas le signal optique et donc les performances du capteur optique. Une telle unité permet de conserver les performances de transmission optique d'un capteur optique tout en améliorant la robustesse et la simplicité du montage du capteur optique au sein de l'emballage.

Un autre avantage est que par le procédé de fabrication qui vient d'être décrit, il est possible de fabriquer en grande quantité et de façon simultanée les capteurs optiques en déposant la sonde active en bout de fibre optique sur des échantillons de petites longueurs. Ces capteurs ainsi préparés peuvent être facilement équipés d'embout particulièrement adapté pour connecter le capteur qui sera introduit par la suite dans les cellules. La manipulation de ces objets de petite taille présente des avantages de mise en oeuvre et de manipulation par rapport à une fibre optique longue.

Une telle unité pourrait éventuellement être une pile à combustible, par exemple une pile à hydrogène.

## Revendications

1. Unité de stockage d'énergie électrique, comprenant au moins une cellule (2) du type lithium-ion munie de deux électrodes séparées par un électrolyte configuré pour générer des porteurs de charge, l'unité comprenant un emballage (3) enrobant ladite au moins une cellule (2), un capteur optique (4) et au moins une fibre optique (5, 6), chaque fibre optique (5, 6) ayant une première extrémité (7, 8) couplée optiquement au capteur optique (4), l'emballage (3) comprenant un logement (10) au sein duquel est logé le capteur optique (4), **caractérisée en ce que** l'unité comprend au moins un embout (11, 12) situé à une deuxième extrémité (13, 14) de ladite au moins une fibre optique (5, 6) et l'emballage (3) comprend au moins un réservoir (15, 16) communicant avec le logement (10) de l'emballage (3) par l'intermédiaire d'au moins un orifice (17, 18) traversé par ladite au moins une fibre optique (5, 6), ledit au moins un réservoir (15, 16) étant rempli d'un matériau (20a, 20b) hermétique à l'air, et **en ce que** ledit au moins un embout (11, 12) comprend une partie interne (21, 22) encapsulée au sein du matériau (20a, 20b) remplissant ledit au moins un réservoir (15, 16) et une partie externe (23, 24) située à l'extérieur de l'emballage (3).

2. Unité selon la revendication 1, dans laquelle ledit au moins un réservoir (15, 16) est un unique réservoir (15) rempli d'un matériau (20a) hermétique à l'air, une première fibre optique (5) reliant le capteur optique (4) à un premier embout (11), et une deuxième fibre optique (6) reliant le capteur optique (4) à un deuxième embout (12), les premier et deuxième embouts (11, 12) comprenant respectivement deux parties internes (21, 22) encapsulées au sein du matériau (20a) remplissant l'unique réservoir (15) et deux parties externes (23, 24) situées à l'extérieur de l'emballage (3).

3. Unité selon la revendication 1, comprenant des premier et deuxième réservoirs (15, 16) remplis respectivement de premier et deuxième matériaux (20a, 20b) hermétiques à l'air, une première fibre optique (5) reliant le capteur optique (4) à un premier embout (11), et une deuxième fibre optique (6) reliant le capteur optique (4) à un deuxième embout (12), les premier et deuxième embouts (11, 12) comprenant respectivement deux parties internes (21, 22) encapsulées respectivement au sein des premier et deuxième matériaux (20a, 20b) remplissant respectivement les premier et deuxième réservoirs (15, 16) et deux parties externes (23, 24) situées à l'extérieur de l'emballage (3).

4. Unité selon l'une quelconque des revendications 1 à 3, dans laquelle l'emballage (3) est souple de façon à être déformable sous l'effet de son propre poids.

5. Unité selon l'une quelconque des revendications 1 à 3, dans laquelle l'emballage (3) est rigide de façon à ne pas être déformable sous l'effet de son propre poids.

6. Unité selon l'une quelconque des revendications 1 à 5, dans laquelle ledit au moins un embout (11, 12) a une forme cylindrique comprenant un creux (30) dans lequel est introduite la deuxième extrémité (13, 14) de ladite au moins une fibre optique (5, 6).

7. Unité selon la revendication 6, dans laquelle ledit au moins un embout (11, 12) comprend de la céramique.

8. Unité selon l'une quelconque des revendications 1 à 7, dans laquelle ledit au moins un embout (11, 12) est maintenu à la deuxième extrémité (13, 14) de ladite au moins une fibre optique (5, 6) à partir d'une colle comprenant au moins un polymère époxyde.

9. Unité selon l'une quelconque des revendications 1 à 8, dans laquelle ladite au moins une fibre optique (5, 6) est enrobée, au moins en partie, d'une gaine (40, 41) s'étendant entre la première extrémité (7, 8) de ladite au moins une fibre optique (5, 6) et une partie de ladite au moins une fibre optique (5, 6) située au sein du logement (10) de l'emballage (3).

10. Unité selon la revendication 9, dans laquelle la deuxième extrémité (13, 14) de ladite au moins une fibre optique (5, 6) est encapsulée au sein dudit au moins un embout (11, 12) de sorte que la deuxième extrémité (13, 14) ne dépasse pas ledit au moins un embout (11, 12).

11. Unité selon l'une quelconque des revendications 1 à 10, comprenant au moins un élément de maintien adhésif (50, 51) situé au sein du logement (10) et en contact avec ladite au moins une fibre optique (5, 6) et une paroi interne de l'emballage (3) délimitant le logement (10).

12. Procédé de fabrication d'une unité de stockage selon l'une quelconque des revendications 1 à 11, comprenant :
- une fourniture :
• d'au moins une cellule (2) du type lithium-ion munie de deux électrodes séparées par un électrolyte configuré pour générer des porteurs de charge ;
• d'un capteur optique (4) ;
• d'au moins une fibre optique (5, 6), chaque fibre optique (5, 6) ayant une première extrémité (7, 8) couplée optiquement au capteur optique (4) ; et
• d'un emballage comprenant un logement (10) au sein duquel est logée ladite au moins une cellule (2) ;
**caractérisé en ce que** le procédé comprend :
▪ un montage d'au moins un embout (11, 12) à une deuxième extrémité (13, 14) de ladite au moins une fibre optique (5, 6) ;
▪ une formation au sein de l'emballage (3) d'au moins un réservoir (15, 16) communicant avec le logement (10) par l'intermédiaire d'au moins un orifice (17, 18) ;
▪ un positionnement du capteur optique (4) au sein du logement (10) et de ladite au moins une fibre optique (5, 6) traversant ledit au moins un orifice (17, 18) ; et
▪ un remplissage dudit au moins un réservoir (15, 16) d'un matériau (20a, 20b) hermétique à l'air, de sorte que ledit au moins un embout (11, 12) comprend une partie interne (21, 22) encapsulée au sein du matériau (20a, 20b) et une partie externe (23, 24) située à l'extérieur de l'emballage (3).

13. Procédé selon la revendication 12, dans lequel le positionnement comprend un placement d'au moins un élément de maintien adhésif (50, 51) au sein du logement (10) et en contact avec ladite au moins une fibre optique (5, 6) et une paroi interne de l'emballage (3) délimitant le logement (10).

14. Procédé selon la revendication 12 ou 13, dans lequel l'emballage (3) comprend deux feuilles souples (90, 91) de façon à être déformables sous l'effet de leur propre poids, et le procédé comprend, avant le remplissage, un scellement des feuilles souples (90, 91) autour du logement (10) et dudit au moins un réservoir (15, 16).
